(19) Europäisches Patentamt

European Patent Office

Office européen des brevets

(11) **EP 4 779 269 A1**

(12) **EUROPEAN PATENT APPLICATION**

(43) Date of publication:
22.07.2026 Bulletin 2026/30

(21) Application number: 25153137.2

(22) Date of filing: **21.01.2025**

(51) International Patent Classification (IPC):
**G01D 5/244** (2006.01)   **G01D 5/347** (2006.01)
**G01D 5/245** (2006.01)

(52) Cooperative Patent Classification (CPC):
**G01D 5/24461; G01D 5/347;** G01D 5/2452;
G01D 5/34794

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **SICK AG**
**79183 Waldkirch (DE)**

(72) Inventor: **FRANCESCON, Massimo**
**10132 Torino (IT)**

(74) Representative: **Manitz Finsterwald**
**Patent- und Rechtsanwaltspartnerschaft mbB**
**Martin-Greif-Straße 1**
**80336 München (DE)**

(54)   **APPARATUS FOR POSITION OR ANGLE DETERMINATION**

(57)   An apparatus (10) for determining a linear or angular displacement, comprises a first and a second part (14, 18) which are movable relative to one another, at least, a first periodic code track (100) having a first number ($N_1$) of first periods (111) and a second periodic coding track (200) having a second number ($N_2$) of second periods (211), a plurality of readout devices (151, 152, 153, 251, 252, 351), each of the readout devices being adapted for reading one corresponding periodic code track and outputting at least one measurement signal (S1 to S6, C1 to C6), and an evaluation unit (40) The evaluation unit (40) comprises a multiplication module (41) configured for generating a product signal (S1S2) by multiplying two measurement signals (S1, C1) of respective readout devices (151, 251), and a filtering module (42) configured for filtering the product signal (S1S2) for generating a displacement signal (D1, D2) and calculating the relative displacement between the first and the second part (14, 18) based on the displace-ment signal (D1, D2).

Fig. 1

**Description**

The invention relates to an apparatus for position or angle determination.

Apparatuses for position or angle determination are generally known and can in particular comprise the following elements: a first and a second part which are movable relative to one another, a code track attached to the first part, a readout device attached to the second part for reading the code track, and an evaluation unit which is configured to determine a relative position between the first and the second part on the reading by the readout device. The position or angle to be determined can be variable by a translational and/or rotational movement of the first part relative to the second part.

Apparatuses of the above-described type are used in a large number of technical fields. For example, such apparatus can be used in machine tools, wherein e.g. a position measurement or an angle measurement of a tool relative to the workpiece is made possible. Other areas of application are angle of rotation sensors, for example for motor feedback systems.

In many applications it is typically required to determine a position, or angle with good precision and enough level of redundancy, so that possible causes of misinterpretation of the input can be revealed. This is mandatory when a certain degree of functional safety must be achieved.

Redundancy is usually implemented by using a plurality of readout devices, instead of a single readout device, the distance(s) between the readout devices being known. The redundancy is obtained by comparing the measurements obtained with the different readout devices. Such type of redundancy is based on a replication of the information which is available when only one readout device is used.

It is desirable to provide apparatuses and methods, which enable a more reliable and accurate determination of a position or angle and with a greater degree of redundancy with respect to the known devices and methods.

This task is fulfilled by the apparatus for determining a linear or angular displacement according to claim 1. Further embodiments thereof and a corresponding method can be found in the further claims.

The apparatus comprises a first and a second part which are movable relative to one another and a plurality of periodic code tracks including, at least, a first periodic code track having a first number of first periods and a second periodic code track having a second number of second periods, wherein the first number is greater than the second number. The apparatus further includes a plurality of readout devices. Each of the readout devices is adapted for reading one corresponding periodic code track of said plurality of periodic code tracks and outputting at least one measurement signal. Each of the readout devices is attached to one of the first part and the second part, while the corresponding periodic code track is attached to the other of the first part and the second part. The apparatus further includes an evaluation unit configured for receiving the measurement signals and determining a relative displacement between the first and the second part. The evaluation unit comprises a multiplication module configured for generating at least a product signal by multiplying the measurement signal of a first readout device adapted for reading the first periodic code track and the measurement signal of a second readout device adapted for reading the second periodic code track. The evaluation unit further comprises a filtering module configured for receiving and filtering at least the first product signal for generating at least one displacement signal and calculating the relative displacement between the first and the second part based on the at least one displacement signal.

For e.g. sinusoidal displacement signals, the first product signal may be expressed as:

$$S1S2 = \tfrac{1}{2}\,[-\cos((N_1 + N_2)\theta) + \cos((N_1 - N_2)\theta)] = \tfrac{1}{2}\,[D1+D2],$$

where $D1 = -\cos((N_1 + N_2)\theta)$ and $D2 = \cos((N_1 - N_2)\theta)$ are two displacement signals, $N_1$, $N_2$ are the first number of periods and the second number of periods and $\theta$ is the relative displacement, which can be derived from the displacement signals.

In the prior art it is known to provide a plurality of measurements generated by reading a single periodic track by a respective plurality of readout devices. By providing at least two measurement signals which are respectively generated by reading the first periodic track and the second periodic track an enhanced redundancy is obtained, with respect to the prior art solutions. By first multiplying the two measurement signals to obtain a product signal and by subsequently filtering the product signal increased resolution and reduced noise is obtained. This makes the present invention particularly advantageous for applications where a high degree of functional safety must be achieved.

The first part and the second part may be linearly or angularly movable relative to one another. For example, the first part may be a shaft that is rotatable about an axis of rotation with respect to a second part being stationary.

Each of the periodic code tracks includes a plurality of first coding sections of a first type and a plurality of second coding sections of a second type. For example, each of the first coding sections may represent a logical one and each of the second coding sections may represent a logical zero. This may be obtained, for example, by providing sections of the first part which are at least partially translucent, thus obtaining the first coding sections, and sections of the first part which are less translucent or completely not translucent, thus obtaining the second coding sections. The first coding sections and the second coding sections are alternatively repeated according to a plurality of first periods along a linear or angular extension of the correspondent periodic code track. The periodic code tracks may have the same angular or longitudinal extension. For example, in embodiments where the first and the second part rotate relative to each other, each of the periodic code tracks may covers an angle of 360°.

According to some embodiments, the readout devices are of the optical type, i.e., each readout device comprises a respective optical transmitting element, for example light emitting elements, and one or more optical sensors, for example photodiodes. According to other embodiments, the periodic code tracks and the readout devices may be of the magnetic type. The sensors may be so shaped and arranged that they generate the measurement signals as respective periodic signals, e.g., as sine or cosine signals. For example, each optical sensor may extend between two curved edges so that the light emitted by the emitting elements is continuously received according to a predefined curve, in particular a sinusoidal curve, which extends from a minimum, corresponding to a first edge of the sensor, to a maximum, corresponding to a central portion of the sensor, and then back to the minimum, corresponding to a second edge of the sensor.

According to embodiments of the present invention, the multiplication module and the filtering module may be provided as analogue circuits, which may for example provided an analogue integrated circuit. Analogue circuits make a representation of continuous signals in electrical form, e.g. with continuous levels of voltage or current. With respect to digital circuits, where here the signal must be one of two discrete levels, analogue circuits can provide continuous signal processing, which can lead to more accurate real-time responses, high bandwidth and higher resolution. This can provide a plurality of advantages, including accuracy, robustness and reliability, which are particularly desirable for safety applications. In embodiments of the present invention, the multiplication module and the filtering module are provided as digital circuits and an analog to digital conversion is applied to the measurement signals.

The product signal may comprise at least two periodic functions having respectively a first frequency and a second frequency lower than the first frequency.

Herein with the term frequency it is to be understood that a spatial frequency can be meant, which indicates how often a periodic function repeats per unit of linear or angular displacement. In embodiments where a spatial frequency is to be meant, the unit of frequency can be the inverse of a linear displacement (e.g., in SI units, $m^{-1}$) or the inverse of an angular displacement (e.g., in SI units, $rad^{-1}$). In case of e.g. a constant turning rate of a rotational encoder or a constant linear speed of a linear encoder, frequency can also mean a frequency in time, i.e. a frequency in Hertz (Hz) of the measurement signal.

The product signal is filtered for one of the first or second frequency. In embodiments of the present invention, particularly when a constant turning rate, as indicated above, is present, the filtering of the product signal can be performed by using a high-pass filter or a band-pass filter for the first frequency and a low-pass filter for the second frequency. Such filters may be provided in a digital or analogue structure, for example as RC element or LC element.

It is to be understood that for filtering, particularly for non-constant turning rates, also a signal filter, e.g. a notch filter or a comb filter, can be used. The signal filter can combine the measurement signal with a time delayed version of the measurement signal, wherein the time delayed version can be produced e.g. using a delay element. Instead of the delay element a measurement signal of a spatially distanced readout device (as disclosed below) can be used, thereby obtaining spatial filtering which is independent of rotational speed.

The filters may be provided as integrated circuits. The filtering results in the at least one displacement signal. Each displacement signal provides a periodic function, for example a trigonometric function, having respectively the first or the second frequency. Each displacement signal provides a function of a relative displacement, i.e., a translational position or a rotational angle, between the first part and the second part. The relative displacement can be derived from the displacement signals.

By filtering the product signal for the higher frequency, a higher resolution is obtained with respect to the information available from the measurement signals. The periodic function at lower frequency can be used to identify the high-resolution periodic function and to provide validations of the results.

In embodiments of the present invention, a spatial filtering is implemented. In such embodiment, the plurality of readout devices includes at least a third readout device adapted for reading the first periodic code track and a fourth readout device adapted for reading the second periodic code track. The multiplication module is configured for generating the first product signal and a second product signal obtained by multiplying the measurement signal of the third readout device and the measurement signal of the fourth readout device. The filtering module is configured for generating the at least one displacement signal by performing a sum or subtraction between the first and the second product signal.

The second product signal may be expressed as:

$$S3S4 = \tfrac{1}{2} \left[ -\cos((N_1 + N_2)(\theta + \omega_2)) + \cos((N_1 - N_2)(\theta + \omega_1)) \right],$$

where $\omega_1$ is an offset angle between the first readout device and the third readout device and $\omega_2$ is an offset angle between the second readout device and the fourth readout device. Being the values of $\omega_1$, $\omega_2$, $N_1$ and $N_2$ known, the second product signal can be also written, similarly to the first product signal, as a relationship between the displacement signals by using trigonometric relationships. For example, if $\omega_1 = \omega_1 = \pi/2$, $N_1$, $N_2$ are integer and odd numbers and $N_1 - N_2 = 2$, knowing that $\cos(\theta + \pi) = -\cos(\theta)$ and that $\cos(\theta + 2k\pi) = \cos(\theta)$, then S3S4 = ½ [D1-D2]. In such embodiments, the filtering module is configured for generating the first displacement signal D1 by performing the sum between the first and the second product signal and configured for generating the second displacement signal D2 by performing the sum between the first and the second product signal.

By providing a plurality of readout devices for reading each of the periodic tracks a second level of enhanced redundancy is achieved. In particular, the first readout device is spaced from the third readout device along a direction parallel to the relative displacement between the first and the second part and/or the second readout device is spaced from the fourth readout device along a direction parallel to the relative displacement between the first and the second part. In embodiments where the first and the second part rotate relative to each other, this is provided by spacing the readout devices along the tangential direction of rotation. By knowing the extension and the number of periods of the periodic code tracks and the offsets between readout devices, trigonometric relationship may be applied in mathematical relationships describing the product signals, so that the product signals may be expressed as simple mathematical relationships, including a sum or a subtraction, of two displacement signals. In such embodiments, the filtering module can simply derive two displacement signals by simply performing a sum or subtraction of the product signals. This permits to achieve computational efficiency of the filtering steps.

In the above described embodiments, additionally, the first readout device may be aligned with the second readout device along a direction orthogonal to the relative displacement between the first and the second part. In embodiments where the first and the second part rotate relative to each other, such direction orthogonal to the relative displacement between the first and the second part is a radial direction with respect to an axis of rotation. This permits to further improve the computational efficiency when deriving the displacement signals from the product signals.

In embodiments of the present invention, at least one of the readout devices outputs at least a first measurement signal and a second measurement signal, the second measurement signal having a phase difference with respect to the first measurement signal. In particular, the phase difference may correspond to a quarter of the period of the corresponding periodic code tracks, so the first measurement signal is a sine signal and the second measurement signal is a cosine signal, or viceversa.

This provides for a third level of enhanced redundancy, as the plurality of measurement signals output by each of the readout devices can be used to generate a greater number of product signals than in the embodiments described above. This permits to achieve a greater plurality of displacement signals than in the solutions of the prior art.

According to such embodiments the multiplication module is configured for generating the first product signal and the second product signal, as above described and at least one third product signal, which is obtained by multiplying the first measurement signal of one first readout device and the second measurement signal of another second readout device of said plurality of readout devices. The filtering module is configured for generating the first displacement signal, the second displacement signal and at least a third displacement signal by performing a linear combination between the first product signal, the second product signal and the at least one third product signal. A linear combination is a mathematical operation where a plurality of terms are first multiplied by a respective plurality of constants and then summed. Sum and subtraction are included in such definition, as they correspond to linear combination where said constants are respectively "1" or "-1". The plurality of displacement signals which are obtained in such embodiments may represent different trigonometric functions, for example some of them may be sine signals, other cosine signals.

A further level of enhanced redundancy is achievable by providing more than two periodic code track and more than two readout devices for reading at least one of the periodic code tracks. According to such embodiments, the plurality of periodic code tracks includes at least a third periodic code track having a third number of third periods, wherein the second number is greater than the third number. The plurality of readout devices includes at least a fifth readout device for reading the first periodic code track and a sixth readout device for reading the third periodic code track. The multiplication module is further configured for generating a further product signal by multiplying the measurement signal of the first readout device and the measurement signal of the fifth readout device. According to such embodiments, the apparatus may be used iteratively for generating additional information. Firstly, as described above, the filtering module generates a plurality of displacement signals, which includes two periodic displacement signals respectively having a frequency proportional to the difference between the first number and the second number and a frequency proportional to the difference between the first number and the third number. Then, the evaluation unit receives said two periodic displacement signals and generating at least another periodic displacement signal having a frequency proportional to the difference between the second number and the third number. In embodiments with three periodic code tracks, this permits to obtain two displacement signals, which respectively have the highest possible frequency, i.e., proportional to the sum between the first number and the second number, and the lowest possible frequency, i.e., proportional to the difference between the second number and the third number.

By combining together two or more of the above described levels of redundancy, it has been found that the present invention achieves an outstanding improvement of the accuracy, robustness and reliability reached in the solutions provided by the prior art.

In embodiments of the present invention, the first number is greater than 16. Particularly, the first number may be any integer comprised between 16 and 2048 or between 16 and 4096 or between 16 and 256. High values of the first number permit to achieve high resolution of the position or angle determination. If the first number and the second number are chosen closed to each other, the resolution of the measurement signals is substantially doubled.

In embodiments of the present invention, the difference between the first number $N_1$ and the second number $N_2$ and/or the difference between the second number $N_2$ and the third number $N_3$ being comprised between 1 and 5. In particular, when such difference is equal to 1, one of the displacement signals has a period coincident with a complete relative rotation between the first part and the second part, i.e., it is possible to obtain a signal which correspond to the actual rotation between the first part and the second part.

A method according to the invention for determining a linear or angular displacement between a first and a second part comprises a first step of generating at least a first product signal by multiplying a measurement signal provided by a first readout device reading a first periodic track and a measurement signal provided by a second readout device reading a second periodic track. The periodic tracks and the readout devices have the features disclosed herein. The method comprises a second step of filtering at least the first product signal for generating at least one displacement signal and a third step of calculating the relative displacement between the first and the second part based on the at least one displacement signal. As explained above, this makes it possible to obtain a stronger redundancy, increased resolution and reduced noise with respect to the prior art solutions.

It is understood that method features which are disclosed in connection with the described embodiments of the apparatus can be part of the method, in whole or in part. In another respect, the statements on the apparatus in accordance with the invention accordingly apply to the method in accordance with the invention; this in particular applies to advantages and embodiments.

The invention will be described in the following only by way of example with reference to the Figures which schematically show the following:

Fig. 1 a schematic view showing a first embodiment of an apparatus according to the present invention;

Fig. 2 a schematic view showing components of the apparatus of Fig 1;

Fig. 3 another schematic view of the apparatus of Fig 1, taken parallel to an axis of rotation of the apparatus;

Fig. 4 a graphic showing results of the position, length or angle determination performed by the apparatus of Fig. 1;

Fig. 5 a schematic view showing a second embodiment of an apparatus according to the present invention, taken parallel to an axis of rotation of the apparatus;

Fig.6 a graphic showing results of the position, length or angle determination performed by the apparatus of Fig. 5;

Fig. 7 a schematic view showing a third embodiment of an apparatus according to the present invention, taken parallel to an axis of rotation of the apparatus;

Fig. 8 a block diagram showing steps of a method for determining a linear or angular displacement, which may be performed with the apparatus of Fig. 7.

Corresponding elements are characterized by the same reference numerals in the Figures.

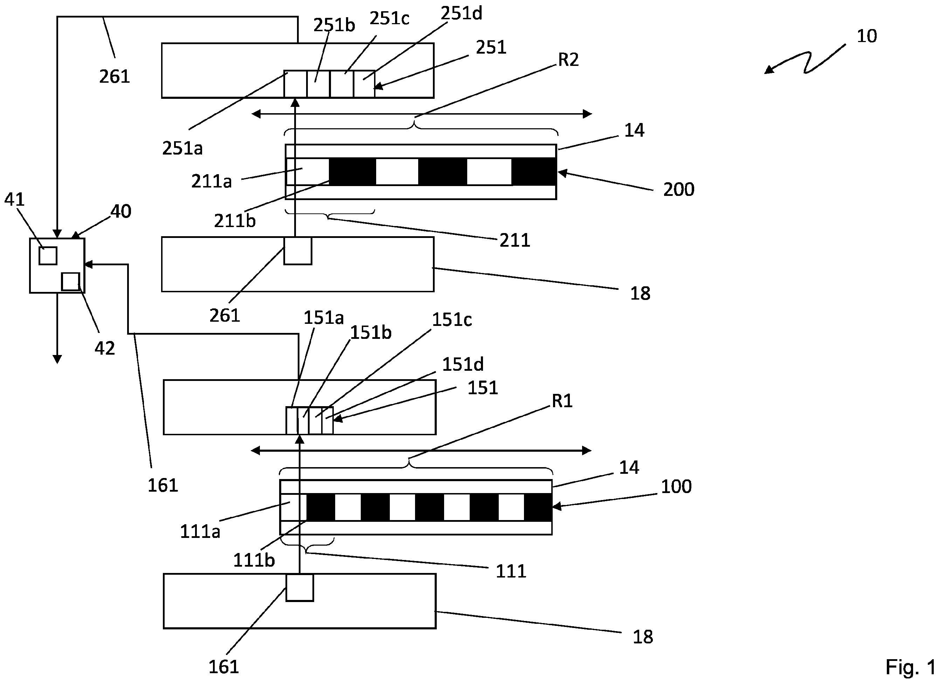

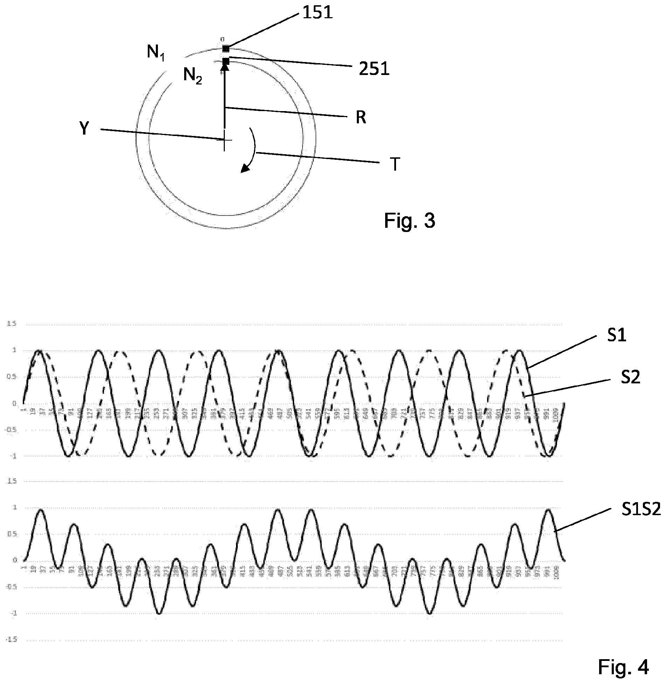

Figs. 1-3 schematically show a first embodiment of an apparatus 10 for determining an angular displacement. The apparatus 10 comprises a first part 14 and a second part 18, which are angularly movable relative to one another so that a variable relative angular displacement θ between the first part 14 and the second part 18 is defined. The first part 14 is rotatable about an axis of rotation Y with respect to a stationary second part 18. Alternatively, according to other embodiments of the invention, the second part 18 is rotatable about an axis of rotation Y with respect to first part 14. The axis of rotation Y defines a radial direction R and a tangential direction T (shown in fig. 3). The radial direction R is orthogonal to the axis of rotation Y and the tangential direction T is parallel to the rotation about axis of rotation Y. The tangential direction T is the direction of relative displacement between the two parts 14, 18. The schematic view of Fig. 1 may also represent an embodiment of an apparatus 10 for determining a linear displacement between two part 14, 18, linearly movable relative to one another. The description which follows may be therefore adapted also to an apparatus according to the present invention, for determining a linear displacement.

The apparatus 10 comprises a first periodic code track 100 and a second periodic track 200 attached to the first part 14. The first periodic code track 100 includes a plurality of first coding sections 111a of a first type and a plurality of second coding sections 111b of a second type. Each of the first coding sections 111a represents a logical one. Each of the second coding sections 111b represents a logical zero. This may be obtained, for example, by providing sections of the first part 14 which are at least partially translucent, thus obtaining the first coding sections 111a, and sections of the first part 14 which are less translucent or completely not translucent, thus obtaining the second coding sections 111b. The first coding sections 111a and the second coding sections 111b are alternatively repeated according to a plurality of first periods 111 along an angular extension $A_1$ of the first periodic code track 100. The first periodic code track 100 includes a first number $N_1$ of first periods 111. Each first period 111 may include at least one first coding section 111a and at least one second coding section 111b. In the embodiment of Fig.1, each period 111 includes one first coding section 111a and one second coding section 111b. The first coding 111a has the same angular extensions of the second coding section 111b. Alternatively, the first coding sections 111a and the second coding 111b may have a different angular extension.

Analogously to the first periodic code track 100, the second periodic code track 200 includes a plurality of first coding sections 211a of the first type and a plurality of second coding sections 211b of the second type, alternatively repeated according to a plurality of second periods 211 along an angular extension $A_2$ of the second periodic code track 200. Analogously to the first period 111, the second period 211 may include at least one first coding section 211a and at least one second coding section 211b. The second period 211 differentiates itself from the first period 111 for having a longer extension, i.e., the coding sections 211a, 211b of the second periodic code track 200 have a longer extension of the coding sections 111a, 111b of the second periodic code track 100. The second periodic code track 200 includes a second number $N_2$ of first periods 211. The first number $N_1$ is greater than the second number $N_2$. In the embodiment of Figs. 1-3, the angular extension $A_2$ of the second periodic code track 200 equals the angular extension $A_1$ of the first periodic code track 100. Both angular extensions $A_1$, $A_2$ cover an angle of 360°.

According to other embodiments, one or both of the first periodic code track 100 and the second periodic code track 200 are attached to the stationary second part 18. In embodiments where the apparatus an apparatus 10 is used for determining a linear displacement, $N_1$ and $N_2$ are the number of periods along respective linear extensions $A_1$, $A_2$ of the periodic code tracks 100, 200.

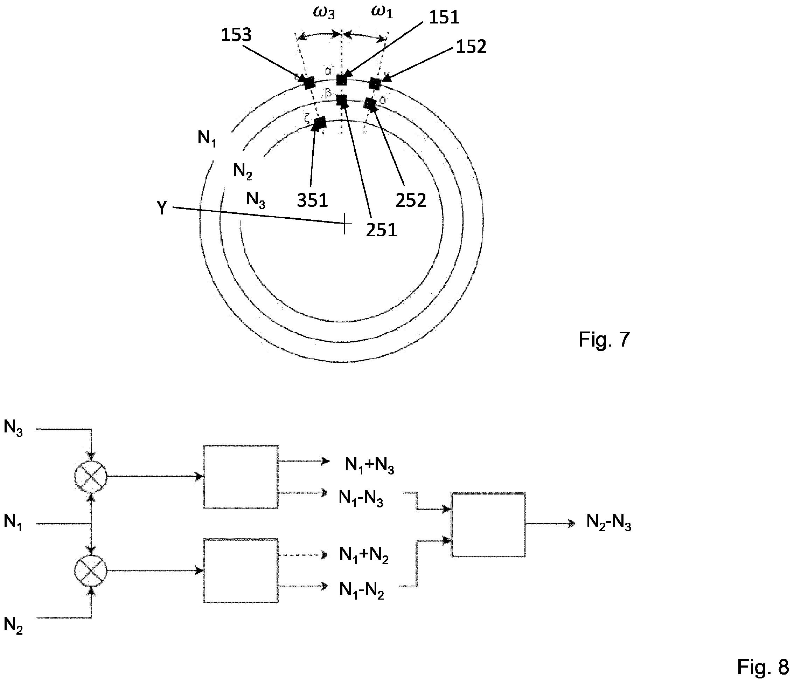

According to other embodiments, for example as shown in fig. 7, the apparatus 10 comprises more than two periodic code tracks, each periodic track being characterized by a respective number of periods. In embodiments having more than two periodic code tracks, the apparatus 10 may comprise two periodic code tracks having the same number of periods.

The apparatus 10 comprises a plurality of readout devices, each of the readout devices being adapted for reading one of the periodic code tracks of the apparatus and outputting a first measurement signal S1, S2 for measuring the relative movement between each readout device 151, 251 and the corresponding periodic code track 100, 200.

In the first embodiment, the plurality of readout devices comprises a first readout device 151 adapted for reading the first periodic code track 100 and a second readout device 251 adapted for reading the second periodic code track 200. The first readout device 151 and the second readout device 251 are attached to the second part 18. In other embodiment, where one or both of the first periodic code track 100 and the second periodic code track 200 are attached to the second part 18, each of the readout devices 151, 251 is attached to the first part 14 if the corresponding periodic code track is attached to the second part 18.

The first readout device 151 and the second readout device 251 comprise respectively a first and second transmitter 161, 261 and a first and second plurality of sensors 151a-d, 251a-d. The first readout device 151 and the second readout device 251 are of the optical type, i.e., the transmitters 161, 261 are optical transmitting elements, for example light sources, and the plurality of sensors 151a-d, 251a-d are optical sensors, for example photodiodes. Fig. 1 shows an instant relative position between the first part 14 and the second part 18, in which a light emitted by the first transmitter 161 shines through the first coding section 111a of the first code track 100 and is received by one sensor of the first plurality of sensors 151a-d, and a light emitted by the second transmitter 261 shines through the first coding section 211a of the second code track 200 and is received by one sensor of the second plurality of sensors 251a-d. In embodiments of the invention, one transmitter may be provided for both first and second plurality of sensors 151a-d, 251a-d.

According to some embodiments, each of the first and second plurality of sensors 151a-d, 251a-d comprises at least a pair of sensors 151a-b, 251a-b, the two sensors of each pair being distanced along the tangential direction T, the distance between the two sensors of each pairs being smaller than the period of the corresponding first or second periodic code track 100, 200. The two sensors of each pair of sensors 151a-b, 251a-b generates a corresponding measurement signal corresponding to the relative movement between each readout device 151, 251 and the corresponding periodic code track 100, 200. In the first readout device 151, one sensor 151a generates a first measurement signal S1 and the other sensor 151b,generates a second measurement signal C1. In the second readout device 251, one sensor 251a generates a respective first measurement signal S2 and the other sensor 251b generates a respective second measurement signal C2. The second measurement signal C1, C2 has a phase difference with respect to the respective first measurement signal S1, S2, which corresponds to the distance between the two sensors generating the respective first measurement signal S1, S2 and second measurement signal C1, C2. In some embodiments, the first measurement signal S1, S2 is a sine signal and the second measurement signal C1, C2 is a cosine signal, the distance between the two sensors generating the respective first measurement signal S1, S2 and second measurement signal C1, C2 corresponding to a quarter of the period 111, 211 of the corresponding periodic code tracks 100, 200.

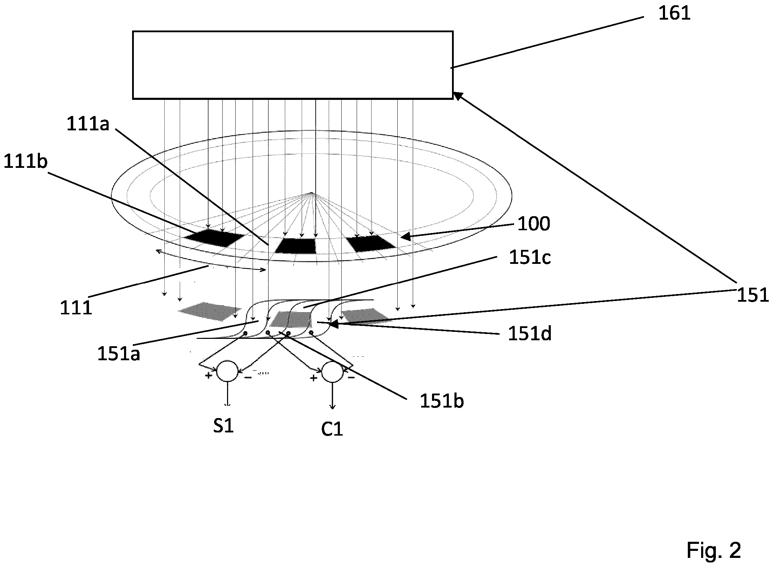

With reference to Fig. 2, the first readout device 151 includes four sensors 151a-d, covering the entire period 111 of the first periodic code track 100. Consequently, the four sensors 151a-d are offset from each other by a quarter of the period 111. The four sensors 151a-d are so shaped and arranged that the first and the third sensor 151a, 151c generate the first measurement signal S1 as a sine signal and the second and the fourth sensor 151b, 151d generate the second measurement signal C1 as a cosine signal. Such description applies also, mutatis mutandis, to the second readout device 251 and to other readout device according to other embodiments.

With reference to Fig. 3, showing a schematic view of the apparatus 10 on a plane orthogonal to the axis of rotation Y, the first readout device 151 is aligned to the second readout device 251 along the radial direction R. According to other embodiments a tangential predefined or measured offset is present between the first readout device 151 and the second readout device 251.

With reference to graph in Fig. 4, the first measurement signal S1 output by the first readout device 151 and the first measurement signal S2 output by the second readout device 251 are shown for a complete relative revolution of the first part 14 with respect to the second part 18 about the axis of rotation Y. In embodiments where the first readout device 151 and the second readout device 251 have a tangential offset, the starting and ending points of the two measurement signals S1, S2, corresponding to the beginning and the ending of one single rotation about the axis Y, may be made respectively coincident by translating one of the signals S1, S2 along the abscissa of the graph in Fig. 4.

If $\alpha$ is a variable measured along the period 111 of the first periodic code track 100 by the first readout signal 151 and $\beta$ is a variable measured along the period 211 of the second periodic code track 200 by the second readout signal 251, then such variables are related to the measurement signals S1, S2, C1 and C2 by the following relationships $S1 = \sin(\alpha)$, $S2 = \sin(\beta)$, $C1 = \cos(\alpha)$ and $C2 = \cos(\beta)$. The angular displacement $\theta$ of the first part 14 with respect to the second part 18 is linked to the variables $\alpha$ and $\beta$ by the following relationships:

$$F1) \qquad\qquad \alpha = N_1\,\theta,$$

$$F2) \qquad\qquad \beta = N_2\,\theta,$$

The apparatus 10 comprises an evaluation unit 40 configured for receiving the measurement signals S1, S2, C1, C2 and determining the angular displacement $\theta$. In embodiments where the apparatus an apparatus 10 is used for determining a linear displacement, $\theta$ represents the linear displacement of the first part 14 with respect to the second part 18.

The evaluation unit 40 comprises a multiplication module 41 configured for generating at least a first product signal S1S2 (shown in Fig. 4) by multiplying the first measurement signal S1, S2 of the first readout device 151 and the second readout device 251:

$$F3) \qquad S1S2 = \tfrac{1}{2}\,[-\cos((N_1 + N_2)\theta) + \cos((N_1 - N_2)\theta)] = \tfrac{1}{2}\,[D1+D2]$$

As also shown in Fig. 4, the first product signal S1S2 is the sum of a first displacement signal D1 and a second displacement D2. The first and second displacement signal D1, D2 are periodic (cosine signals) and have respectively a first frequency proportional to the sum of the first number $N_1$ and the second number $N_2$ and a second frequency proportional to the difference between the first number $N_1$ and the second number $N_2$.

The evaluation unit 40 comprises a filtering module 42 configured for receiving and filtering the first product signal S1S2. The product signal S1S2 is filtered for one of the first and/or the second frequency, respectively generating the first displacement signal D1 and/or the second displacement signal D2. The filtering module 42 then calculates the angular displacement $\theta$ based on one of the displacement signals D1, D2.

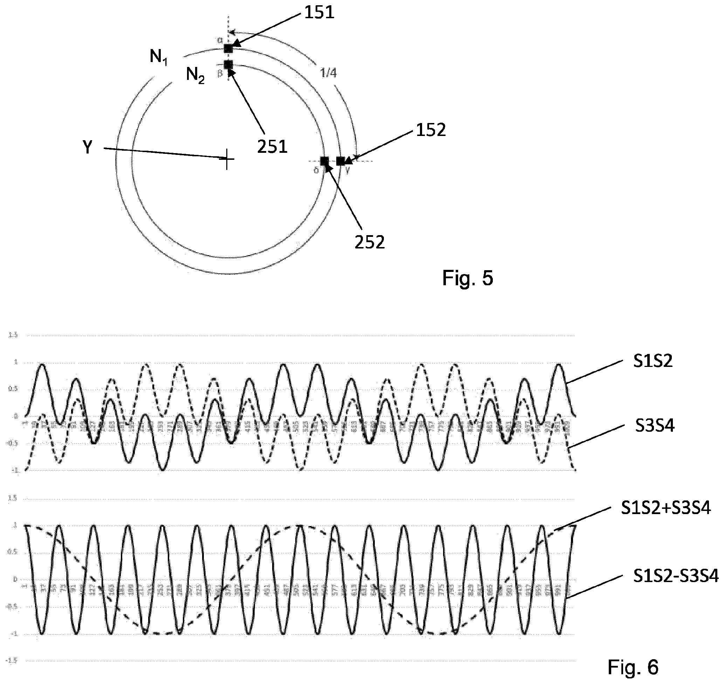

Figs. 5 and 6 schematically show a second embodiment of the apparatus 10, where the displacement signals D1, D2, are determined by spatial filtering. Spatial filtering is obtained, as shown in Fig. 5, by including in the plurality of readout devices a third readout device 152 adapted for reading the first periodic code track 100 and a fourth readout device 252 adapted for reading the second periodic code track 200. The first readout device 151 is spaced from the third readout device 152 along the tangential direction T of a first offset angle $\omega_1$. For example, the offset angle $\omega_1$ may be 90°. The second readout device 251 is spaced from the fourth readout device 252 along the tangential direction T of a second offset angle $\omega_2$. The second offset angle $\omega_2$ may be equal to the first offset angle $\omega_1$. In embodiments where the second offset angle $\omega_2$ is equal to the first offset angle $\omega1$, the first readout device 151 is aligned to the second readout device 251 along the radial direction R and the third readout device 152 is aligned to the fourth readout device 252 along the radial direction R. Analogously to the first readout device 151 and the second readout device 251, the third readout device 152 and the fourth readout device 252 are adapted for outputting a respective first measurement signal S3, S4 and a respective second measurement signal C3, C4. The third readout device 152 and the fourth readout device 252 have the same configuration of the first readout device 151 in fig. 2, so that the corresponding first measurement signal S3, S4 is generated as a sine signal and the corresponding second measurement signals C3, C4 is generated as a cosine signal.

If $\alpha$ is a variable measured along the period 111 of the first periodic code track 100 by the third readout signal 152 and $\delta$ is a variable measured along the period 211 of the second periodic code track 200 by the fourth readout signal 252, then such variables are related to the measurement signals S3, S4, C3 and C4 by the following relationships $S3 = \sin(\gamma)$, $S4 = \sin(\delta)$, $C3 = \cos(\gamma)$ and $C4 = \cos(\delta)$. The angular displacement $\theta$ of the first part 14 with respect to the second part 18 is linked to the variables $\gamma$ and $\delta$ by the following relationships:

$$F4) \qquad\qquad\qquad \gamma = N_1 (\theta + \pi/2),$$

$$F5) \qquad\qquad\qquad \delta = N_2 (\theta + \pi/2),$$

The multiplication module 41 according to the second embodiment is configured for generating the first product signal S1S2 and a second product signal S3S4 obtained by multiplying the first measurement signal S3 of the third readout device 152 and the first measurement signal S4 of the fourth readout device 252:

$$F6) \qquad S3S4 = \tfrac{1}{2} [ - \cos((N_1 + N_2) (\theta + \pi/2)) + \cos((N_1 - N_2) (\theta + \pi/2))]$$

Being the values of $N_1$ and $N_2$ known, the second product signal S3S4 can be also written as a relationship between D1 and D2 by using trigonometric relationships. For example, if $N_1$ and $N_2$ are integer and odd numbers and $N_1 - N_2 = 2$, and knowing that $\cos(\theta + \pi) = - \cos(\theta)$ and that $\cos(\theta + 2k\pi) = \cos(\theta)$, then:

$$F6') \qquad\qquad\qquad S3S4 = \tfrac{1}{2} [D1-D2]$$

In such example, the filtering module 42 is configured for generating the first displacement signal D1 by performing the sum between the first and the second product signal S1S2, S3S4. The filtering module 42 is further configured for generating the second displacement signal D2 by performing the sum between the first and the second product signal S1S2, S3S4.

In other embodiments, in particular where $N_1$ and $N_2$ are integer, trigonometric relationships permit to simplify the second product signal S3S4 and to express it in terms of the first displacement signal D1 and a second displacement D2, like the first product signal S1S2. As above shown, a convenient choice of the $N_1$ and $N_2$ and of the offset angles $\omega_1$, $\omega_2$ permits to express the product signals S1S2, S3S4 as simple mathematical relationships, including a sum or a subtraction, of the first and second displacement signals D1, D2. The filtering module 42 can generate the first displacement signal D1 and the second displacement D2 by performing simple mathematical operations like, sum and subtraction, between the first and the second product signal S1S2, S3S4.

With the plurality of signals output by the readout devices according to the present invention, various level of redundancy for a more reliable determination of the angular displacement $\theta$ may be implemented. A first level of redundancy is provided by the presence of a plurality of periodic code tracks. This permits to obtain results having different frequencies that the original measurement signals output by the readout device. The product signal S1S2 comprises at least two periodic functions having respectively a first frequency $N_1 + N_2$ and a second frequency $N_1 - N_2$ The higher frequency function provides a higher resolution in the first displacement signal D1 than in the measurements. If $N_1$ and $N_2$ are chosen closed to each other, the resolution of the measurement signals is substantially doubled. If $N_1 - N_2 = 1$, the second displacement signal D2 has a period coincident with a complete rotation of the first part 14 about the axis.

A second level of redundancy is provided by the presence of a plurality of readout devices for reading the same periodic code track. As shown with reference with the embodiment of Figs. 5 and 6, using two pairs of readout sensors 151, 152; 251, 252 for respectfully reading the first and the second periodic track 100, 200 provides additional information, which can be used in the multiplication module 41 for generating the first and the second product signal S1S2, S3S4. Embodiments have been disclosed, where the filtering module 42 can determine the displacement signals D1, D2 with reliability and computational efficiency, by performing a sum or subtraction of the first and the second product signal S1S2, S3S4. A third level of redundancy is provided by using both the first and the second measurement signals S1 to S4, C1 to C4 of one or more of the readout devices 151, 152; 251, 252, as detailed in the following.

With reference to the first embodiments of Figs. 1-4, the multiplication module 41 may be further configured for generating a third product signal S1C2 by multiplying the first measurement signal S1 of the first readout device 151 and the second measurement signal C2 of the second readout device 251, thus obtaining the sum of a third displacement signal D3 and a fourth displacement signal D4:

$$F7) \qquad S1C2 = \tfrac{1}{2}\,[\sin((N_1 + N_2)\theta) + \sin((N_1 - N_2)\theta)] = \tfrac{1}{2}\,[D3+D4]$$

The filtering module 42 is further configured for receiving and filtering the second product signal S1C2. The second product signal S1C2 is filtered for one of the first and/or the second frequency, respectively generating the third displacement signal D3 and the fourth displacement signals D4. The third displacement signal D3 and the fourth displacement signals D4 are sine signals having respectively the same frequencies of the first and second displacement signals D1, D2. The angular displacement $\theta$ is then calculated based on one of the third and fourth displacement signals D3, D4. Such determination can be used for validating the results obtained by filtering the first product signal S1S2.

With reference to the second embodiment of Figs. 5, 6, the multiplication module 41 may be further configured for generating the first, second and third product signals S1S2, S3S4, S1C2 and a fourth product signal S3C4 obtained by multiplying the first measurement signal S3 of the third readout device 152 and the second measurement signal C4 of the fourth readout device 252:

$$F8) \qquad S3C4 = \tfrac{1}{2}\,[\sin((N_1 + N_2)(\theta + \pi/2)) + \sin((N_1 - N_2)(\theta + \pi/2))]$$

Being the values of $N_1$ and $N_2$ known, the second product signal S3C4 can be also written as a relationship between D3 and D4 by using trigonometric relationships. For example, if $N_1$ and $N_2$ are integer and odd numbers and $N_1 - N_2 = 2$, and knowing that $\cos(\theta + \pi) = -\cos(\theta)$ and that $\cos(\theta + 2k\pi) = \cos(\theta)$, then:

$$F8') \qquad\qquad\qquad S3C4 = \tfrac{1}{2}\,[-D3+D4]$$

In such example, the filtering module 42 is configured for generating the third displacement signal D3 by performing the subtraction between the third and the fourth product signal S1C2, S3C4. The filtering module 42 is further configured for generating the fourth displacement signal D4 by performing the sum between the third and the fourth product signal S1C2, S3C4. Such determination can be used for validating the results obtained with the first and second displacement signals D1, D2.

In general, in an embodiment, $N_1$ and $N_2$ can be chosen as mutually prime. In such case, the pair of two first measurement signals S1, S2 can be present only once in a complete relative revolution or complete relative linear displacement between the first part 14 and the second part 18, thereby allowing to determine an absolute position reading.

Figs. 7 and 8 schematically show a third embodiment of an apparatus 10 for determining a linear or angular displacement, where the plurality of periodic code tracks includes a first periodic code track 100 having a first number $N_1$ of first periods 111, a second periodic coding track 200 having a second number $N_2$ of second periods 211 and a further third periodic code track 300 having a third number $N_3$ of third periods 311. Analogously to the to the first and the second embodiment, the first number $N_1$ is greater than the second number $N_2$. The third periodic code track 300 covers an angle of 360°. In the third embodiment, the second number $N_2$ is greater than the third number $N_3$. Analogously to the second embodiment, the plurality of readout devices comprises the first and third readout devices 151, 152 adapted for reading the first periodic code track 100, and the second and fourth readout devices 251, 252 adapted for reading the second periodic code track 200. In the third embodiment the plurality of readout devices includes a fifth readout device 153 for reading the first periodic code track 100 and a sixth readout device 351 for reading the third periodic code track 300. The fifth readout device 131 is spaced from the first readout device 151 along the tangential direction T of a third offset angle $\omega_3$. The third offset angle $\omega_3$ may be opposite to the third offset angle $\omega_1$, i.e., if the second readout device 152 is provided clockwise with respect to first readout device 151, then the third readout device 153 is provided counter clockwise or viceversa. The fifth readout device 151 may be aligned to the sixth readout device 351 along the radial direction R. Analogously to the to the first and the second embodiment, the measurement from the first, second, third and fourth readout devices 151, 152, 251, 252 are used from the evaluation unit for generating at least one of the first, second, third and fourth displacement signals D1, D2, D3, D4. As shown, the first and the third displacement signal D1, D3 are periodic and have a first frequency proportional to $N_1 + N_2$, while the second and the fourth displacement signal D2, D4 are periodic and have a second frequency proportional to $N_1 - N_2$.

In the third embodiment, the multiplication module 41 is further configured for generating at least a fifth product signal S1S5 by multiplying the first measurement signal S1 of the first readout device 151 and the first measurement signal S5 of the fifth readout device 351:

$$F9) \qquad S1S5 = \tfrac{1}{2}\,[-\cos((N_1 + N_3)\theta) + \cos((N_1 - N_3)\theta)] = \tfrac{1}{2}\,[D5+D6]$$

The fifth product signal S1S5 is the sum of a fifth displacement signal D5 and a sixth displacement D6. The fifth and sixth displacement signal D5, D6 are periodic and have respectively a third frequency proportional to the sum of the first number $N_1$ and the third number $N_3$ and a fourth frequency proportional to the difference between the first number $N_1$ and the third number $N_3$.

The filtering module 42 is further configured for receiving and filtering the fifth product signal S1S5. The fifth product signal S1S5 is filtered for one of the third and/or the fourth frequency, respectively generating the fifth displacement signal D5 and/or the sixth displacement signal D6.

Analogously to the measurement signals provided by the readout devices, the displacement signals D1, D2, D3, D4, D5 and D6, can be further processed in the evaluation unit 40 for generating other displacement signals. In particular, the second and/or the fourth displacement signal D2, D4, which have a second frequency proportional to $N_1 - N_2$ and the sixth displacement signal D6 which have a second frequency proportional to $N_1 - N_3$ may be combined together for generating at least a seventh displacement signal D7 having a frequency proportional to the difference between the second number $N_2$ and the third number $N_3$. As a final result, two displacement signals D1, D7 is obtained, which respectively have the highest possible frequency, i.e., proportional to $N_1 + N_2$, and the lowest possible frequency, i.e., proportional to $N_2 - N_3$. If $N_2 - Ns = 1$, the seventh displacement signal D7 is a periodic signal having a period coincident with a complete rotation of the first part 14 about the axis of rotation Y.

As mentioned above, it is possible to determine an absolute position reading, wherein $N_2-N_3$ is mutually prime with anyone of $N_1-N_2$ or $N_1-N_3$, wherein $N_2-N_3$ is used as one of the first measurement signals S1, S2 and either $N_1 + N_2$, $N_1-N_2$ or $N_1-N_3$ is used as the other first measurement signal S1, S2.

The present invention also relates to a corresponding method for determining a linear or angular displacement.

REFERENCE SIGNS

10: apparatus
14: first part
18: second part
100, 200, 300: periodic code tracks
111, 211, 311: periods
$N_1$, $N_2$, $N_3$: number of periods
151, 152, 153, 251, 252, 351: readout devices
151a, 151b, 151c, 151d: sensors
161,261: transmitters
S1, S2, S3, S4, S5, S6: first measurement signal
C1, C2, C3, C4, C5, C6: second measurement signal
S1S2, S3S4, S1C2, S3C4, S1S5:
40: evaluation unit
41: multiplication module
42: a filtering module
D1, D2, D3, D4, D5, D6, D7: displacement signals
Y: axis of rotation
R: radial direction
T: tangential direction
$\omega_1$, $\omega_2$, $\omega_3$: offset angles

**Claims**

1. An apparatus (10) for determining a linear or angular displacement, comprising:

   - a first and a second part (14, 18) which are movable relative to one another,
   - a plurality of periodic code tracks (100, 200, 300) including, at least, a first periodic code track (100) having a first number ($N_1$) of first periods (111) and a second periodic coding track (200) having a second number ($N_2$) of second periods (211), wherein the first number ($N_1$) is greater than the second number ($N_2$),
   - a plurality of readout devices (151, 152, 153, 251, 252, 351), each of the readout devices being adapted for reading one corresponding periodic code track of said plurality of periodic code tracks (100, 200, 300) and outputting at least one measurement signal (S1 to S6, C1 to C6), each of the readout devices (151, 152, 153, 251, 252, 351) being attached to one of the first part (14) and the second part (18) and the corresponding periodic code track (100, 200, 300) being attached to the other of the first part (14) and the second part (18), the plurality of readout devices comprising at least a first readout device (151) adapted for reading the first periodic code track (100) and a second readout device (251) adapted for reading the second periodic code track (200), and

- an evaluation unit (40) configured for receiving the measurement signals (S1 to S6, C1 to C6) and determining a relative displacement between the first and the second part (14, 18),

wherein the evaluation unit (40) comprises:

- a multiplication module (41) configured for generating at least one product signal (S1S2) by multiplying a measurement signal (S1, C1) of the first readout device (151) and a measurement signal (S2, C2) of the second readout device (251), and
- a filtering module (42) configured for receiving and filtering the at least one product signal (S1S2) for generating at least one displacement signal (D1, D2) and calculating the relative displacement between the first and the second part (14, 18) based on the at least one displacement signal (D1, D2).

2. The apparatus (10) according to claim 1,

wherein the product signal (S1S2) comprises at least two periodic functions having respectively a first frequency and a second frequency lower than the first frequency, and
wherein the at least one product signal (S1S2) is filtered for one of the first or second frequency, resulting in the at least one displacement signal (D1, D2).

3. The apparatus (10) according to claim 1 or 2,

wherein the plurality of readout devices (151, 152, 153, 251, 252, 351) includes at least a third readout device (152) adapted for reading the first periodic code track (100) and a fourth readout device (252) adapted for reading the second periodic code track (200),
wherein the multiplication module (41) is configured for generating a first product signal (S1S2) and a second product signal (S3S4) obtained by multiplying a measurement signal (S3) of the third readout device (152) and a measurement signal (S4) of the fourth readout device (252), and
wherein the filtering module (42) is configured for generating the at least one displacement signal (D1, D2) by performing a sum or subtraction between the first and the second product signal (S1S2, S3S4).

4. The apparatus (10) according to claim 3, wherein the filtering module (42) is configured for generating a first periodic displacement signal (D1) and a second periodic displacement signal (D2) by respectively performing a sum and a subtraction between the first and the second product signal (S1S2, S3S4), the first displacement signal (D1) having a frequency proportional to the sum of the first number ($N_1$) and the second number ($N_2$) and the second displacement signal (D2) having a frequency proportional to the difference between the first number ($N_1$) and the second number ($N_2$).

5. The apparatus (10) according to claims 3 or 4,
wherein the first readout device (151) is spaced from the third readout device (152) along a direction parallel to the relative displacement between the first and the second part (14, 18) and/or the second readout device (251) is spaced from the fourth readout device (252) along a direction parallel to the relative displacement between the first and the second part (14, 18).

6. The apparatus (10) according to any of the previous claims,
wherein the first readout device (151) is aligned with the second readout device (251) along a direction orthogonal to the relative displacement between the first and the second part (14, 18).

7. The apparatus (10) according to any of the previous claims,
wherein at least one of the readout devices (151) outputs at least a first measurement signal (S1) and a second measurement signal (C1), the second measurement signal (C1) having a phase difference with respect to the first measurement signal S1), in particular, wherein the first measurement signal (S1) is a sine signal and the second measurement signal (C1) is a cosine signal.

8. The apparatus (10) according to any of the claim 7,

wherein the multiplication module (41) is configured for generating at least one third product signal (S1C2) by multiplying the first measurement signal (S1) of one first readout device (151) and the second measurement signal (C2) of another second readout device (251) of said plurality of readout devices, and

wherein the filtering module (42) is configured for generating at the first displacement signal (D1), the second displacement signal (D2) and at least a third displacement signal (D3) by performing a linear combination between the first product signal (S1S2), the second product signal (S3S4) and the at least one third product signal (S1C2).

9. The apparatus (10) according to claim 8,

wherein the multiplication module (41) is configured for generating the third product signal (S1C2) by multiplying the first measurement signal (S1) of the first readout device (151) and the second measurement signal (C2) of the second readout device (251) and generating a fourth product signal (S3C4) by multiplying the first measurement signal (S3) of the third readout device (152) and the second measurement signal (C4) of the fourth readout device (252), and

the filtering module (42) is configured for generating the third displacement signal (D3) by performing a sum between the third and the fourth product signal (S1C2, S3C4) and/or generating a fourth displacement signal (D4) by performing a subtraction between the third and the fourth product signal (S1C2, S3C4).

10. The apparatus (10) according to any one of the previous claims,

wherein the plurality of periodic code tracks (100, 200, 300) includes at least a third periodic code track (300) having a third number ($N_3$) of third periods (311), wherein the second number ($N_2$) is greater than the third number ($N_3$),

wherein the plurality of readout devices (151, 152, 153, 251, 252, 351) includes at least a fifth readout device (153) for reading the first periodic code track (100) and a sixth readout device (351) for reading the third periodic code track (300), and

wherein the multiplication module (41) is further configured for generating at least a fifth product signal (S1S5) by multiplying the measurement signal (S1, C1) of the first readout device (151) and the measurement signal (S5, C5) of the fifth readout device (351).

11. The apparatus (10) according to claim 10,

wherein the filtering module (42) is configured for generating a plurality of displacement signal (D1, D2, D3, D4, D5, D6), at least including two periodic displacement signals (D2, D6) respectively having a frequency proportional to the difference between the first number ($N_1$) and the second number ($N_2$) and a frequency proportional to the difference between the first number ($N_1$) and the third number ($N_3$) and

wherein the evaluation unit (40) is further configured for receiving said two periodic displacement signals (D2, D6) and generating at least another periodic displacement signal (D7) having a frequency proportional to the difference between the second number ($N_2$) and the third number ($N_3$).

12. The apparatus (10) according to any of the previous claims,
wherein the first number ($N_1$) is greater than 16

13. The apparatus (10) according to any of the previous claims,
wherein the difference between the first number ($N_1$) and the second number ($N_2$) and/or the difference between the second number ($N_2$) and the third number ($N_3$) being comprised between 1 and 5.

14. The apparatus (10) according to any of the previous claims,
wherein the multiplication module (41) and the filtering module (42) are analogue modules.

15. A method (1000) for determining a linear or angular displacement between a first and a second part (14, 18) which are movable relative to one another,

- wherein a plurality of periodic code tracks (100, 200, 300) is provided, the plurality of periodic code tracks (100, 200, 300) including, at least, a first periodic code track (100) having a first number ($N_1$) of first periods (111) and a second periodic coding track (200) having a second number ($N_2$) of second periods (211), wherein the first number ($N_1$) is greater than the second number ($N_2$),

- wherein a plurality of readout devices (151, 152, 153, 251, 252, 351) is provided, each of the readout devices being adapted for reading one corresponding periodic code track of said plurality of periodic code tracks (100, 200, 300) and outputting at least one corresponding measurement signal (S1 to S6, C1 to C6), each of the readout devices (151, 152, 153, 251, 252, 351) being attached to one of the first part (14) and the second part (18) and the corresponding periodic code track (100, 200, 300) being attached to the other of the first part (14) and the second part (18), the plurality of readout devices comprising at least a first readout device (151) adapted for reading the first periodic code track (100) and a second readout device (251) adapted for reading the second periodic code track (200), and wherein the method comprises at least the steps of:

- generating at least a first product signal (S1S2, S1C2) by multiplying the measurement signal (S1, C1) of the first readout device (151) and the measurement signal (S2, C2) of the second readout device (251), and

- filtering at least the first product signal (S1S2) for generating at least one displacement signal (D1, D2) and calculating the relative displacement between the first and the second part (14, 18) based on the at least one displacement signal (D1, D2).

Fig. 1

Fig. 2

Fig. 3

Fig. 4

Fig. 5

151  152

252

251

N₁  N₂

Y

S1S2

S3S4

S1S2+S3S4

S1S2-S3S4

Fig. 6

Fig. 7

Fig. 8

Europäisches
Patentamt

European
Patent Office

Office européen
des brevets

# EUROPEAN SEARCH REPORT

**Application Number**

EP 25 15 3137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2023/155952 A1 (IC HAUS GMBH)<br>24 August 2023 (2023-08-24)<br>* abstract; figures *<br>* pages 18-19 *<br>* pages 22-23 *<br>----- | 1,2,6,7,<br>10-15<br>3-5,8,9 | INV.<br>G01D5/244<br>G01D5/347<br>G01D5/245 |

**TECHNICAL FIELDS SEARCHED (IPC)**

G01D

The present search report has been drawn up for all claims

| Place of search | Date of completion of the search | Examiner |
|---|---|---|
| Munich | 11 June 2025 | Barthélemy, Matthieu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 3137

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2025

| Patent document cited in search report | Publication date | Patent family member(s) | Publication date |
|---|---|---|---|
| WO 2023155952 A1 | 24-08-2023 | CN 118715420 A | 27-09-2024 |
| | | DE 102022103577 A1 | 17-08-2023 |
| | | EP 4479708 A1 | 25-12-2024 |
| | | WO 2023155952 A1 | 24-08-2023 |

EPO FORM P0459

For more details about this annex : see Official Journal of the European Patent Office, No. 12/82